# EUROPEAN PATENT SPECIFICATION

(11) **EP 1 940 677 B1**
(45) Date of publication and mention of the grant of the patent: **18.02.2009**
(21) Application number: 05823556.5
(22) Date of filing: 21.11.2005
(51) Int. Cl.: B62K 13/00

(54) **FOUR-WHEELED PEDAL CYCLE FOR USE ON A ROAD OR ON RAILS**
VIERRÄDRIGES PEDALFAHRZEUG ZUR VERWENDUNG AUF EINER STRASSE ODER AUF SCHIENEN
CYCLE A PEDALES A QUATRE ROUES DESTINE A ETRE UTILISE SUR ROUTE OU SUR RAILS

(30) Priority: 28.10.2005 IT MI20052058
(43) Date of publication of application: 09.07.2008
(73) Proprietor: Lampis, Aldo, 08035 Nurri (IT)
(72) Inventor: Lampis, Aldo, 08035 Nurri (IT)
(74) Representative: Mocchetti, Ilio G.
(86) International application number: PCT/IT2005/000678
(87) International publication number: WO 2007/049314

(56) References cited:
- WO-A2-20/04083013
- GB-A- 1 145 704
- GB-A- 190 315 740
- US-A- 1 436 532
- US-A- 6 068 278

## Description

### Field of application

The present invention relates to pedal operated vehicles and in particular to four-wheeled pedal cycles having coachwork of different designs, and adaptable for use on rails.

### Present state of the art

The four-wheeled pedal cycles are light-vehicles often used for purposes of amusement and recreation, an example of which might be the rickshaw type of vehicle rented by holiday-makers at the seaside. A large number of models and options are available, some of which are listed here. Well-known, for example are those with a single set of pedals or with more than one set placed separately; steering may be done by a steering wheel or a handlebar; there are usually two independent, but coordinated, sets of steering means and brakes; there may be one or two gears; seats may be high up like a saddle or low down like a car seat; pedals may be aligned with the driving wheels or inside them. In the most expensive models, pedalling is assisted by an electric motor run off a battery.

Most countries have regulations covering the use of pedal vehicles on roads. In Italy, paragraph 50 of the new Highway Code which includes light vehicles, classified as "velocipedes", states: "*vehicles with two or more wheels propelled solely by muscular action, using pedals or similar devices, worked by the person on the vehicle;* .... *(cont.). The velocipedes must not exceed 3.00 m in width and 2.20 m in height ".* Structural and functional features of velocipedes, and the devices and materials with which they must be equipped, are set forth in paragraph 68 of the Highway Code. No registration and driving licence are needed, except of course that the persons who hire them out must possess a commercial licence.

### Purpose of the invention

In spite of there already being such a wide variety of pedal vehicles available, there still appears to be room for novel forms of this means of transport. The purpose of the present invention is in fact to extend the ways of using pedal vehicles still Further for example making them so that they can be used on rails as well as on a road without altering their constructional characteristics. A further purpose of the invention is to provide them with different types of bodywork, again without altering their structure. The light vehicles of this kind at present known do not appear to possess the two characteristics now offered, namely that of being able to run on road or on rails, and that of being able to change their outward form as, present models having been created from the outset for a certain purpose, their bodywork is designed for that purpose only.

The railway velocipede disclosed in GB 15740 A (Frank Bradly), 20 August 1903, claims in combination: the track wheels (three or four wheels embodiments are foreseen), front and rear axles for said wheels, and a longitudinal frame bar connecting said axles, of a pedal crank shaft mounted on said longitudinal frame bar, a sprocket wheel fast on said shaft, a chain connecting said sprocket wheel with the sprocket on the on the spindle of the rear wheel, a hand crank fulcruned on the longitudinal frame bar, and projecting below the same, a pitman connected with one of the pedal cranks at the opposite extremity, a foot rest fast on the said frame bar forward of the crank shaft, and a projecting into the plane of the pitman, whereby when the latter is detached from the pedal crank, it may be thrown forward and attached to the foot rest, thus locking the hand lever against movement. This type of velocipede is clearly only designed to run on railways but not on asphalted road, because of the lack of a steering mechanism for rotating the rigid forecarriage.

GB 1145704 A (Thomas Kitchin). 19 March 1969, claims an attachment for enabling a bicycle to be adapted for riding alone a two-rail railway track, comprising an outrigger frame supporting an outrigger wheel (or wheels in tandem) and connectible to the cycle frame whereby the cycle wheels can run upon one rail of a track while the outrigger wheel runs upon the other rail of the track, there being means for engaging the rails to maintain the wheels laterally upon the track, said outrigger frame comprising a beam member connected at its outer end to the outrigger wheel support and adapted for pivotal connection at its inner end to the support for the cycle rear wheel and a strut member detachably connectible at its outer end to the outrigger wheel support and at its inner end to a front portion of the cycle frame, whereby on disconnection of one end of said strut member said beam member can be swung forwards to a folded position where it lies alongside the cycle frame. The means for engaging the rails to maintain the wheels laterally upon the track consists of freely rotatable guide rollers or wheels mounted adjacent to the cycle wheels and to the outrigger wheel and adapted to bear against the inner faces of the top flanges of the rails.

Surely, this type of attachment doesn't transform a common bicycle into a pedal vehicle suitable to bear interchangeable bodyworks. The bicycle is substantially transformed in a three-wheel vehicle for running on the two rails but it holds its original bicycle aptitude; in fact, the attachment shall be detached to drive it on asphalted roads, so mounting a bodywork is inconceivable.

### Summary of the invention

Subject of the present invention is therefore a pedal vehicle as described in claim 1. Further advantageous characteristics are described in the dependent claims.

The pedal vehicle subject of the present invention comprises:
- at least one pair of driving wheels forming the rear axle and a pair of steering wheels constituting the forecarriage, both pairs of wheels being fitted with tyres;
- interchangeable bodywork made to the preferred design;
- a frame joining the forecarriage, rear axle and bodywork;
- steering means fitted with a steering lock to be mounted for driving the vehicle on rails, and removable for using it on an asphalted road;
- means for articulating the forecarriage to the rest of the frame;
- at least four retractile rollers, one for each wheel of the forecarriage and of the rear axle; said rollers rotate perpendicular to the rails, keeping their revolving surface in contact with the rail's inner edge to ensure that, during movement, the wheel is held close against the rail, or else can be moved to a position where they do not interfere with the wheels when the vehicle is driven on a road.

With the characteristics as described above, the pedal vehicle subject of the present invention can advantageously be driven on a road or along rails and obviously, therefore, on both if travelling conditions require it. The steering lock serves to prevent the rider from accidentally turning the handlebar when this might derail the vehicle. The four wheels are independent and have separate dampers for absorbing shocks when riding over a rough surface, to ensure adherence to the ground even if there are holes. The vehicle can be constructed to seat two or more people with a small seat for a child if needed, and with plenty of room for baggage. A canopy can be unrolled for protection against rain or from the sun. There are usually two independent sets of pedals with transmission gears and brakes. Pedalling takes place inside the line of the wheels to facilitate changing the bodywork and for greater stability while the vehicle is moving. The four-wheeled cycle can be pedalled in the normal way on road, and on rails, like an ordinary bicycle, and can be ridden by one person only, sitting either on the right or left as preferred, without any special effort being needed. Two models can be supplied, one with free wheel pedalling and with brake pads on the rim, this model being driven by the handle bar through sheathed cables, and a second model in which pedalling is continuous and which has counterpedal brakes. The light-weight bodywork (aluminium or fibreglass-reinforced plastic) can be made to several designs according to preference or to the use required of the vehicle, such as a locomotive, an automobile, a rickshaw, a gig, a small truck, etc. The rectangular tube frame extends back to the rear axle and projects outward beyond the articulated forecarriage in order to provide support for the bodywork, whatever design may be chosen. An advantage of this pedal vehicle is that most of it can be assembled using parts of an ordinary bicycle. The frame is tubular, the transmission consists of a crown wheel and pedals, a chain and speed gear. Steering is done by the handlebar but this, contrary to that of an ordinary bicycle, does not fit into the fork but is connected to a steering mechanism comprising arms and stub axles like an ordinary car. The handlebar works this mechanism by means of misaligned shafts joined together by universal joints. Two bicycle forks that support the hubs of the front wheels are joined by an articulation to the two ends of a bar so that the forecarriage articulates when the vehicle is moving round a bend with the steering locked. The shafts of the two driving wheels are supported by double-row ball bearings specially made for the vehicle so that they shall be of a lighter kind than those on the market (it should be noted that most of the weight is carried by these bearings). Each of the four wheels is made by welding the rim of a bicycle wheel with its spokes and tyre to the rim of another bicycle wheel without spokes but with the tyre. By doing this the vehicle rests on a broader surface but without making the wheel too heavy, thus ensuring greater stability, better braking but also overall reliability as if one tyre is punctured the other one still functions. The double-tyred wheel makes up for the difference in distance between the two rails that is created between a bend and a straight stretch (cm 95 on a bend and cm 98 on a straight stretch). The vehicle functions better if the diameter of the back axle wheels is greater than that of the forecarriage wheels.

Being so versatile, the pedal vehicle subject of the invention can be used for tourist purposes increasing the attractions of play-parks and beaches, or be ridden in disused railway areas where a permit to use the vehicle can be obtained. It could also become extremely useful in towns, during various kinds of events or at weddings, even replacing private cars when traffic has to be stopped as a measure for reducing atmospheric pollution, or even linking several such vehicles together for transporting a greater number of people. Finally, the four-wheeled cycle can be made in smaller sizes to suit children of different ages, in such cases without its being adaptable for use on rails for reasons of size.

### Short description of the figures

Further purposes and advantages of the present invention will be made clear from the following detailed description of an example of its production and from the attached drawings given for purely explanatory and non-limiting reasons, in which:
Fig. 1 shows a rough perspective view of the vehicle subject of the invention driven by pedals over an asphalted road, in one of the possible executions of the bodywork;
Fig. 2 shows the pedal-driven vehicle in Fig. 1, moving along rails.
Figs. 3 to 6 show views, in scale 1:10, of the frame and simplified mechanical parts of the vehicle subject of the invention, in the following order: side view, plan view, front view, back view.

### Detailed description of some preferred ways of realizing the invention

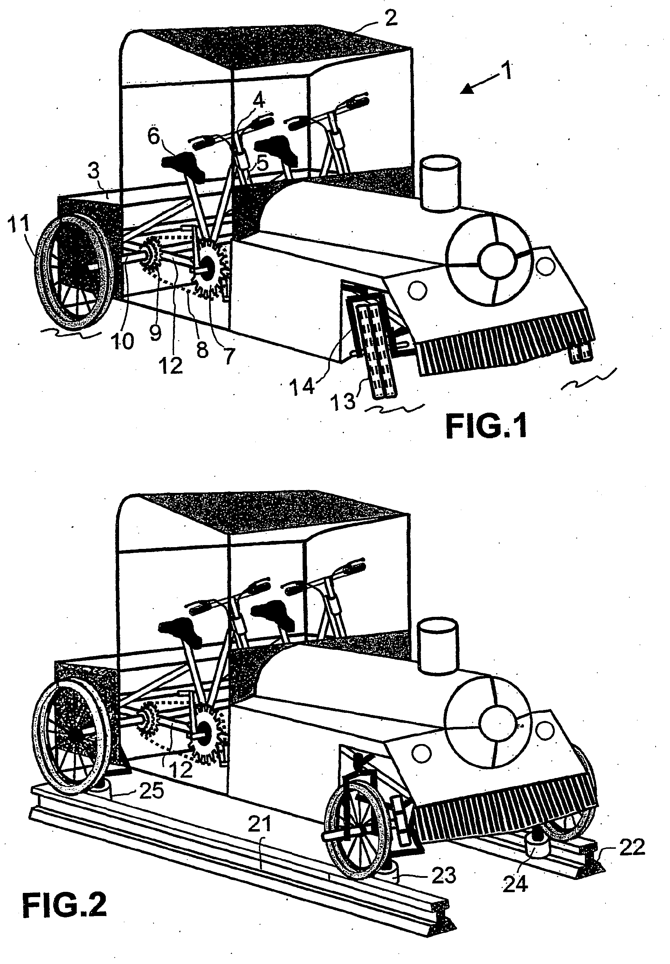

In the following description, corresponding parts shown in the figures will be indicated by the same symbols. With reference to Figure 1, a pedal-driven four-wheeled cycle 1 is shown encased in bodywork designed to imitate a locomotive, complete with roll-out canopy 2 and luggage compartment 3. Partly visible, on looking inside the cabin, are two propulsion and guiding units like two bicycles placed side by side, with handlebar 4, steering column 5, saddle 6, crown wheel 7 for the pedals, chain 8, speed change 9 and transmission shalt 10 joined to one wheel 11 of the rear axle and to two driving wheels. Mechanical parts and bodywork are supported by a tubular frame 12 of varying design. At the front there is a wheel 13 pivoting in a fork 14, both forming part of a forecarriage articulated to the frame 12. The wheels are similar to those of an ordinary bicycle. The vehicle 1 is pedal-driven on asphalted roads or dirt tracks, and the handlebar 4 operates the steering mechanism (seen in greater detail in the following figures).

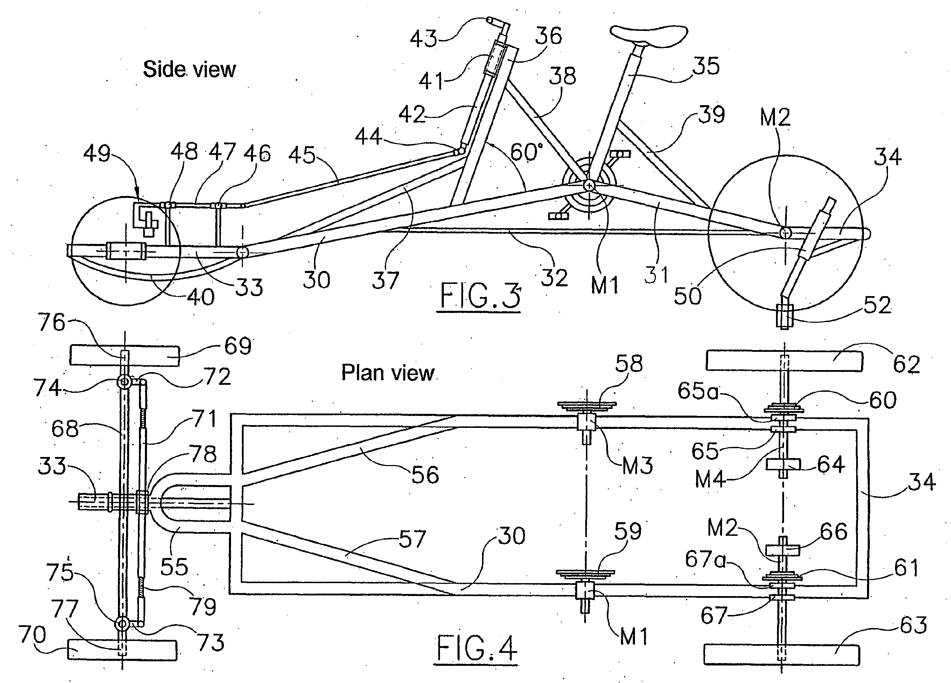

Figure 2 differs from Figure 1 due to the presence of two rails 21 and 22 forming a rail track along which the vehicle 1 moves held in place by four rollers (of which only three are visible) 23, 24 and 25. The rollers are placed close to the point of contact between wheel and rails, contact being maintained with the inner shoulder of the respective wheels 21 and 22. It will be seen that the rollers rise above the rails just sufficiently to hold the tyres firmly against them. The rollers are hinged and turn freely on their respective axes of rotation perpendicular both to the direction of the rails and to the axes of rotation of the wheels of both the forecarriage and the rear axle. The rollers are placed in position by means of supporting arms anchored to the frame 12 more clearly shown in the next figures. With reference to Figure 3, it will be seen that the tubular frame 12 is formed of contiguous lengths strongly welded together. The frame comprises a triangular supporting section including the following parts: two oblique lengths 30, 31 meeting at their highest point in the front hub M 1 of the pedal crown wheel, a thin reinforcing base 32 and two horizontal lengths of tube 33 and 34 that extend right and left of the base 32 to sustain the forecarriage and rear axle respectively. The shaft M2 of one of the rear wheels subtends at the point of conjunction between 31 and 34. From point M1 a vertical tube 35 rises to support the saddle. Another vertical tube 36 to support the handlebar rises at a suitable distance from M1, calculated on the oblique tube 30. The vertical tube 36 is joined at the top M1 by an oblique tube 38 and, at the point of conjunction between the tube 30 and horizontal length 33, by means of an oblique tube 37. The vertical tube 35 is joined to the oblique tube 31 by an oblique tube 39. A curved reinforcement 40 is joined to the two ends of the length 33 to prevent bending. The vertical tube 36 is welded to a tube sleeve 41 inside which turns the steering column 42 of the handlebar 43. The end of the steering column 42 is joined to a universal mechanism to transmit the turning motion of handle bar 43 to the steering mechanism 49. Said mechanism comprises, in the following order: a first universal joint 44, a rod 45, a second universal joint 46, a shorter rod 47 and a third universal joint 48. On the rear length 34 a sleeve 50 is mounted and in which a short arm 51 can slide to place a retractile roller 52 in position against one of the rails (not visible in this view).

Referring to Figure 4, it will be noted that, seen flat, the frame is rectangular in shape except for the extension 33 joined to the rest of the frame by a U-shaped reinforcing tube 55 from which another two obliquely reinforcing tubes, 56 and 57, lead off to join the oblique tubes 30. The symmetry of the frame in relation to the centre line is clearly seen. At a central position on the frame are two independent pedal units comprising two pinions M3 and M1 to support the respective crown wheels 58 and 59 and step-up gears. Two chains (not shown) connect the crown wheels 58 and 59 with their respective sprockets in the gears 60 and 61 mounted on the shafts M4 and M2 of the rear axle wheels 62 and 63. The front end 34 of the frame carries two pairs of bearings to support rotation of the shafts M4 and M2, the bearings also housing the respective brakes 64 and 66 that can be of the disk or drum kind. A first pair of bearings comprise those marked 65 and 65a and a second pair those marked 67 and 67a. At the forecarriage end the frame includes a bar 68 parallel with the axis of the front wheels 69 and 70. The tubular bar 68 is welded in the centre of the extension 33 of the frame with which it forms a right angle. Visible on the forecarriage is the steering mechanism that comprises a steering rod 71 at whose ends are fixed two short perpendicular bars 72 and 73 terminating at two supports 74 and 75 for the two shafts 76 and 77 of the front wheels 69 and 70. At the centre of the steering rod 71 is a rack and gear system 78 worked by the steering mechanism with the universal joints shown in the previous figure. At one end of the rod 71 is an adjusting screw 79 whose length is the same as that of the rod for setting the steering movement. All the wheels are similar to those of an ordinary bicycle in that they have a hub, spokes and tyres and are made as explained above in the introduction. Front wheel radius is 20 cm and back wheel radius is 26 cm. On looking at Figure 4 it is immediately clear how this particular form of frame simplifies changes of bodywork without interfering with the mechanical part. The frame in fact carries several points for attaching the body both at the front end 33 and at the back 34 as well as along the sides.

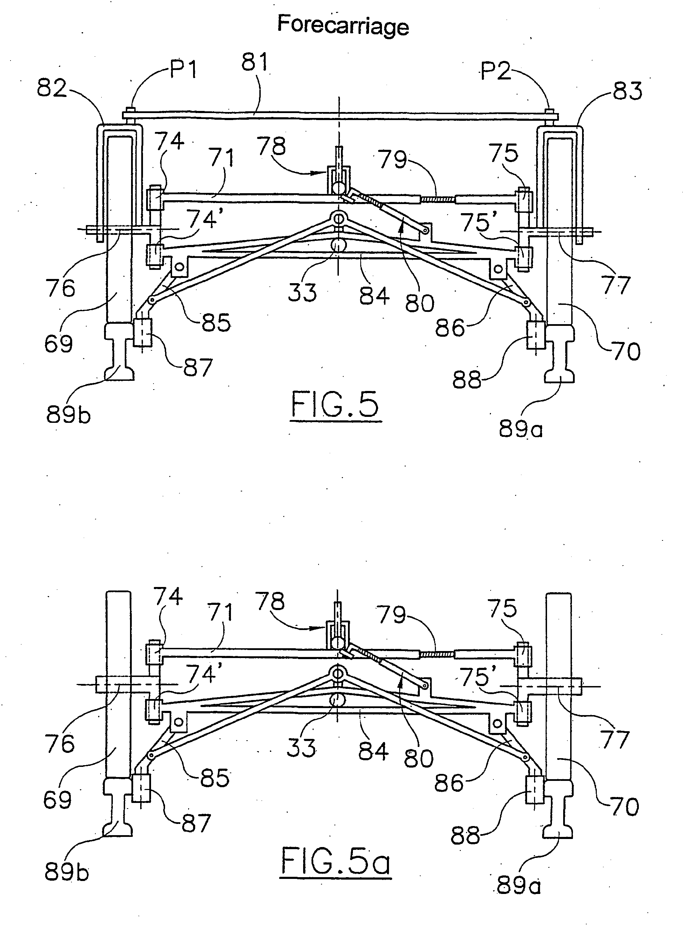

Figure 5 shows more details of the forecarriage and shows all the parts referred to when describing Figure 4, numbers of these parts being the same in both figures with the addition of nine others. One part to note in particular is a short arm for the steering lock 80, the length of which is adjustable, one end being fixed to the frame so that it can rotate, while the other end is beak-shaped and fits into a ring fixed to the rod 71 to prevent it from moving. At the top of the figure is the bar 81 on the forecarriage; the bar is adjustable in length, and is joined to two forks 82 and 83 that support the hubs of the front wheels 69 and 70 and also the bearings. At the point where they join the bar 81, the forks 82 and 83 have pins P1 and P2 that rotate freely in their seats in the bar 81. A bar 84 is welded to the centre of the tubular extension 33 of the frame to support the articulated forecarriage. The two ends of the bar 84 are rigidly joined to two lower bushings 74'. 75' into which are two pins fixed to the steering supports 74 and 75 and rotating freely inside the bushings. The frame bar 84 includes two supports for two short arms 85 and 86 of respectively two retractile rollers 87 and 88. In the figure the rollers 87 and 88 are shown in contact with the inner shoulder of two rails 89a and 89b respectively. During movement, when the steering rod 71 is released and the rollers 87 and 88 are in their idle position, rotation of the short arms 72 and 73 (Figure 4) and of their respective supports 74 and 75, causes the shafts 76 and 77 to rotate around their vertical axes and, with them, the front wheels. But when the rod 71 is locked and rollers 87 and 88 (together with the other two on the rear axle) are in contact with the rails 89a and 89b, curvature of these two latter create a moment that causes rigid rotation of the forks 82 and 83 and, with them, the forecarriage around the pins P1 and P2, disarticulating the forecarriage from the rest of the frame.

Figure 5a illustrates another embodiment of the forecarriage introduced for aesthetic reasons where necessary. Compared with what is shown in Figure 5, the forecarriage in Figure 5a has no forks 82 and 83, bar 81 or pins P1 and P2; to make up for this the shafts 76 and 77 have been reinforced.

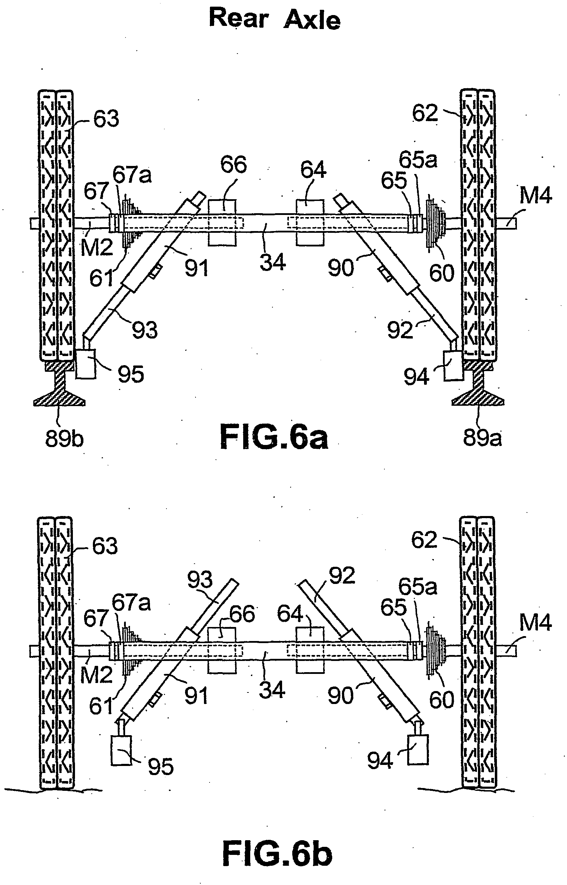

Figure 6a shows the rear axle in greater detail, all the parts described in Figure 4 being marked with the same number, and nine more being added. To note in particular are two tubular parts 90 and 91 within which two short arms 92 and 93 slide to support two more retractile rollers 94 and 95. The figure shows the rollers 94 and 95 in contact with the inner shoulder of the two rails 89a and 89b respectively to ensure that the wheels 62 and 63 of the rear axle remain on the rails. To describe it more clearly, the axis of rotation of each roller 94, 95 is perpendicular to the rail, and the revolving surface is in contact with the shoulder of the rail but is slightly higher to allow it to engage with the rim of the wheel. By causing the short arms 92 and 93 to slide into their respective tubular seats 90 and 91 and locking them in place with two screws, the rollers are fixed in their idle position.

Figure 6b differs from Figure 6a solely because the rollers 94 and 95 are shown in their retracted position when the wheels are on a road.

In accordance with the description given, technicians skilled in the art can make a number of changes without thereby departing from the invention's field of protection, the present invention therefore comprising all embodiments covered by the following claims.

## Claims

1. Pedal vehicle (1) comprising:
- at least one pair of driving wheels (62, 63) constituting the rear axle and one pair of steering wheels (69, 70) constituting the forecarriage;
- steering means (43,49) controlled by the rider;
- a tubular frame (30, 31, 33, 34) to join the rear axle to the forecarriage and to a bodywork;
**characterized by** the fact that it also includes:
- means to lock the steering (80) to be fitted when using the vehicle on rails and removable when using it on an asphalted road;
- means for articulating said forecarriage (74', 76, 75', 77; 81, 82, 83, P1, P2) in relation to the rest of the frame;
- at least four retractile rollers (87, 88; 94, 95), one for each wheel of the forecarriage and of the rear axle, to be placed each with its axis of rotation perpendicular to the rails (89a, 89b) and with its revolving surface in contact with the rim of the rails, so keeping the wheels in position when the vehicle is used on rails, but moveable to a position in which they are released from the rails in order to use the vehicle on an asphalted road.

2. Pedal vehicle as in claim 1, **characterized by** the fact that said revolving surface extends above the edge of the rail to engage with the rim of each respective wheel.

3. Pedal vehicle as in any one of the preceding claims, **characterized by** the fact that said wheels (62, 63, 69, 70) comprise a bicycle wheel complete with tyre, the rim of which is welded to the rim of another bicycle wheel without spokes and hub but retaining its tyre.

4. Pedal vehicle as in any one of the preceding claims, **characterized by** the fact that said means of articulation for the forecarriage comprise two bicycle forks (82, 83) to support the wheel hubs, said forks terminating with a pin (P1, P2) articulated to one respective end of a bar (81) of adjustable length.

5. Pedal vehicle as in any one of the preceding claims, **characterized by** the fact that said means for locking the steering comprise a short arm (80) of adjustable length, one end of which is fixed to the frame in such a way that it can rotate, the other end being beak-shaped to engage a seat fixed to the steering rod and to hold it firm.

6. Pedal vehicle as in any one of the preceding claims, **characterized by** the fact that said rear axle includes two pairs of bearings (65, 65a; 67, 67a), each pair supporting its respective wheel shaft (M4, M2).

7. Pedal vehicle as in any one of the preceding claims, **characterized by** the fact that it includes a positioning arm (85) 86, 92, 93) for each of said retractile rollers (87, 88, 94, 95).

8. Pedal vehicle as in any one of the preceding claims, **characterized by** the fact that the pedals work a crown wheel (58, 59) placed inside the ideal line joining a rear wheel (62, 63) to a front wheel (69, 70).

9. Pedal vehicle as in any one of the preceding claims, **characterized by** the fact that said frame comprises an extension (33) that projects beyond the forecarriage to facilitate installation of the bodywork.

10. Pedal vehicle as in claim 9, **characterized by** the fact that said bodywork is interchangeable.

## Patentansprüche

1. Pedalfahrzeug (1), **dadurch gekennzeichnet, dass** es folgendes umfasst:
- mindestens ein Paar Antriebsräder (62, 63), die die Hinterachse bilden, und ein Paar Steuerräder (69, 70), die die Vorderachse bilden;
- ein vom Fahrer gesteuertes Lenkmittel (43, 49);
- einen Rohrrahmen (30, 31, 33, 34) zur Verbindung der Hinterachse mit der Vorderachse und mit einer Karosserie;
**dadurch gekennzeichnet, dass** es außerdem folgendes umfasst:
- ein Lenkschloss (80), das bei Anwendung des Fahrzeugs auf Schienen anzubringen und bei dessen Anwendung auf asphaltierter Straße entfernbar ist;
- Hilfsmittel zur gelenkigen Verbindung der genannten Vorderachse (74', 76, 75', 77; 81, 82, 83, P1, P2) mit dem restlichen Teil des Rohrrahmens;
- mindestens vier einziehbare Rollen (87, 88; 94, 95), und zwar eine für jedes Rad der Vorderachse und der Hinterachse, wobei jede Rolle so zu positionieren ist, dass deren Rotationsachse im rechten Winkel zu den Schienen (89a, 89b) und deren Rotationsfläche in Kontakt zur Schienenkante steht, damit die Räder bei Anwendung des Fahrzeugs auf Schienen die gegebene Lage beibehalten und gleichzeitig in eine Lage zu bewegen sind, die die Entfernung von den Schienen und die Anwendung des Fahrzeugs auf einer asphaltierten Straße ermöglicht.

2. Pedalfahrzeug nach Anspruch 1, **dadurch gekennzeichnet, dass** sich die genannte Rotationsfläche über die Schienenkante ausbreitet, damit diese in die jeweilige Radfelge einrastet.

3. Pedalfahrzeug nach einem der vorhergehenden Ansprüche, **dadurch gekennzeichnet, dass** die genannten Räder (62, 63, 69, 70) ein mit Reifen ausgestattetes Fahrradrad umfassen, dessen Felge an die Felge eines weiteren Fahrradrads geschweißt ist, das weder Speichen noch eine Nabe aufweist, jedoch mit einem Reifen ausgestattet ist.

4. Pedalfahrzeug nach einem der vorhergehenden Ansprüche, **dadurch gekennzeichnet, dass** die Hilfsmittel zur gelenkigen Verbindung der Vorderachse zwei Fahrradgabeln (82, 83) zur Halterung der Radnaben umfassen, wobei sich am Ende der genannten Gabeln ein Bolzen (P1, P2) befindet, welcher an einem jeweiligen Ende einer in der Länge einstellbaren Stange (81) drehbar befestigt ist.

5. Pedalfahrzeug nach einem der vorhergehenden Ansprüche, **dadurch gekennzeichnet, dass** die genannten Lenkschlösser einen in der Länge verstellbaren kurzen Herbei (80) umfassen, der an einem Ende drehbar an den Rahmen befestigt ist, während das andere Ende schnabelförmig für das Einrasten in eine an der Lenkstange befestigten Aufnahme ausgestaltet ist, womit die Lenkstange fest gehalten wird.

6. Pedalfahrzeug nach einem der vorhergehenden Ansprüche, **dadurch gekennzeichnet, dass** die genannte Hinterachse zwei Paar Lager (65, 65a; 67, 67a) umfasst, wobei jedes Paar zur Halterung der jeweilige Radwelle dient.

7. Pedalfahrzeug nach einem der vorhergehenden Ansprüche, **dadurch gekennzeichnet, dass** es einen Positionierungsarm (85, 86, 92, 93) für jede der genannten Rollen umfasst;

8. Pedalfahrzeug nach einem der vorhergehenden Ansprüche, **dadurch gekennzeichnet, dass** die Pedale ein Kronrad (58, 59) betätigen, das innerhalb der Ideallinie der Verbindung zwischen einem Hinterrad (62, 63) und einem Vorderrad (69, 70) liegt.

9. Pedalfahrzeug nach einem der vorhergehenden Ansprüche, **dadurch gekennzeichnet, dass** der genannte Rahmen eine Verlängerung (33) umfasst, die über die Vorderachse hinaus ragt, um die Montage der Karosserie zu vereinfachen.

10. Pedalfahrzeug nach Anspruch 9, **dadurch gekennzeichnet dass** die genannte Karosserie austauschbar ist.

## Revendications

1. Véhicule à pédale (1), comprenant:
- au moins une paire de roues motrices (62, 63 constituant l'axe arrière et une paire de roues de braquage (9, 70) constituant le train avant;
- des moyens de braquage (43, 49) contrôlés par le chauffeur ;
- un châssis tubulaire (30, 31, 33, 34) pour joindre l'axe arrière au train avant et à une carrosserie;
**caractérisé en ce, qu'**il comprend aussi:
- des moyens pour bloquer le braquage (80), à monter lors de l'emploi du véhicule sur rail et lors de l'emploi sur une route asphaltée;
- des moyens pour articuler le dit train avant (74', 76, 75', 77 ; 81, 82, P1, P2) en respect au reste du châssis;
- au moins quatre rouleaux rétractiles (87, 88 ; 94, 95), un pour chaque roue du train avant et de l'axe arrière, à placer chacun avec son axe de rotation perpendiculaire aux rails (89a, 89b) et pour tenir sa surface de rotation en contact avec le bord des rails, ainsi maintenant les roues en position lors de l'emploi du véhicule sur rail, mais mobiles jusqu'à une position dans la quelle elles sont détachées des rails, dans l'emploi du véhicule sur une route asphaltée.

2. Véhicule à pédale selon la revendication 1), **caractérisé en ce que** la dite surface tournante se développe au dessus du bord du rail, pour s'engager avec le bord de chaque respective roue.

3. Véhicule à pédale selon une quelconque des précédentes revendications, **caractérisé en ce que** les dites roues (62, 63, 69, 70) comprennent une roue de vélo, complète de pneu, le bord duquel étant soudé au bord d'une autre roue de vélo, sans des rayons et un moyeu mais retenant son pneu.

4. Véhicule à pédale selon une quelconque des précédentes revendications, **caractérisé en ce que** les dits moyens d'articulation pour le train avant comprennent deux fourchettes de vélo (82, 83) pour supporter les moyeux de la roue, les dites fourchettes terminant avec un pivot (P1, P2) articulé à une respective extrémité d'une barre (81) de longueur réglable.

5. Véhicule à pédale selon une quelconque des précédentes revendications, **caractérisé en ce que** les dits moyens pour bloquer le braquage comprennent un court bras (80) de longueur réglable, une extrémité duquel est fixée au châssis, en manière telle de pouvoir tourner, et l'autre extrémité a une forme à bec, pour s'engager avec un siège fixé à la barre de braquage, pour la tenir fixée.

6. Véhicule à pédale selon une quelconque des précédentes revendications, **caractérisé en ce que** ie dit axe arrière comprend deux paires de coussinets (65, 65a ; 67, 67a), chaque paire supportant son respective arbre (M4, M2) de la roue.

7. Véhicule à pédale selon une quelconque des précédentes revendications, **caractérisé en ce qu'**il comprend un bras de positionnement (85, 86, 92, 93) pour chacun des dits rouleaux rétractiles (87, 88, 94, 95).

8. Véhicule à pédale selon une quelconque des précédentes revendications, **caractérisé en ce que** les pédales coopèrent avec une couronne dentée (58, 59), placée à l'intérieur de la ligne idéale qui unit une roue arrière (62, 63) à une roue avant.

9. Véhicule à pédale selon une quelconque des précédentes revendications, **caractérisé en ce que** le dit châssis comprend une extension (33) qui fait saillie au de là du train avant, en facilitant l'installation de la carrosserie.

10. Véhicule à pédale selon la revendication 9, **caractérisé en ce que** la dite carrosserie est interchangeable.
